# EUROPÄISCHE PATENTSCHRIFT

(11) **EP 0 872 680 B1**
(45) Veröffentlichungstag und Bekanntmachung des Hinweises auf die Patenterteilung: **17.12.2003**
(21) Anmeldenummer: 98250042.3
(22) Anmeldetag: 03.02.1998
(51) Int. Cl.: F16L 55/162, F16L 55/18, E03F 7/12

(54) **Vorrichtung zur Inspektion und Instandhaltung von Rohren**
Apparatus for the inspection and servicing of pipes
Dispositif pour l'inspection et l'entretien de tuyaux

(30) Priorität: 18.04.1997 DE 19717720
(43) Veröffentlichungstag der Anmeldung: 21.10.1998
(73) Patentinhaber: Prof. Dr.-Ing. Stein & Partner GmbH, 44799 Bochum (DE)
(72) Erfinder: Stein, Dietrich, Prof. Dr.-Ing., 44892 Bochum (DE)
(74) Vertreter: Pfenning, Meinig & Partner

(56) Entgegenhaltungen:
- DE-A- 4 409 886
- US-A- 2 481 013
- US-A- 3 606 913
- US-A- 3 946 761
- US-A- 4 413 655

## Beschreibung

Die Erfindung bezieht sich auf eine Vorrichtung zur Inspektion und Instandhaltung von Rohren gemäß dem Oberbegriff des Anspruchs 1.

Derartige Vorrichtungen werden beispielsweise eingesetzt, um die Kanalisation, d.h. Anlagen zur Sammlung und Ableitung von Wasser, auf einwandfreie Funktion und Mängelfreiheit zu überprüfen und durch entsprechende Wartungs- bzw. Sanierungsmaßnahmen in betriebsbereitem und betriebssicherem Zustand zu halten.

Herkömmlicherweise werden zur Überprüfung auf einwandfreie Funktion und Mängelfreiheit sowie für Wartungs- bzw. Sanierungsmaßnahmen die jeweilige Kanalhaltungen für diesen Zeitraum außer Betrieb gesetzt, um sie abwasserfrei zu halten. Dies kann beispielsweise durch Umleiten, zeitweiligen Rückstau oder Überpumpen erreicht werden.

Dies hat den Nachteil, daß der jeweilige Kanal während der Sanierungs- bzw. Überprüfungsarbeiten nicht mehr zur Ableitung und Sammlung von Abwasser zur Verfügung steht. In vielen Fällen und insbesondere bei großen Sammlerkanälen in kommunalen und privaten Entwässerungsnetzen kann daher aus technischen und ökonomischen Gründen dieses Verfahren nicht verwendet werden.

Aus der EP 0 377 141 A2 ist ein Rohrprüf- und -absperrgerät bekannt, welches einen festen rohrzylindrischen Innenteil für den Durchgang des durch das Rohr geleiteten Mediums sowie zwei in axialer Richtung im Abstand voneinander angeordnete ringförmige Druckkammern, deren Außenflächen sich bei Druckbeaufschlagung an die Innenwand des Rohres anlegen, aufweist. Die Druckkammern sind derart elastisch ausgebildet, daß sie sich bei weiterer Druckbeaufschlagung in axialer Richtung ausdehnen und die Kammer zwischen sich verkleinern, so daß der Druck in dieser erhöht wird. Demgemäß wird dieses Gerät vornehmlich zur Prüfung von Rohrundichtigkeiten, insbesondere bei Muffenverbindungen mit Hilfe des in der Kammer erzeugten Druckes eingesetzt.

Weiterhin ist aus der DE 43 15 927 Al ein Verfahren zum Abdichten und Instandsetzen von geschädigten erdverlegten Rohrleitungen bekannt, das sowohl bei Unterbrechung des durch die Rohrleitung hindurchgehenden Flüssigkeitsstromes als auch bei fortbestehendem Flüssigkeitsstrom durchgeführt werden kann. Hierbei wird die abzudichtende Stelle durch Verschlußkörper abgeschlossen und in den abgeschlossenen Raum werden die Komponenten eines aushärtenden Gemischs eingebracht.

Aus der US-Patentschrift 3 606 913 ist eine Ausführungsform für eine Vorrichtung zur Versiegelung von Rohren aus dem Rohrinnenraum bekannt, die es ermöglicht, eine Kammer gegenüber dem übrigen Rohrinnenraum abzudichten, wobei die Kammer kreisringförmig ist und stets entlang der gesamten Rohrwandung eines Rohrabschnittes abdichtet. Die dabei entstehende zentrale Öffnung der ringförmigen Kammer bildet zwar einen Durchlaß für das durchströmende Medium, jedoch sind die Möglichkeiten zur räumlichen Ausnutzung des Innenraumes der abgedichteten Kammer relativ gering, etwa zur Aufnahme größerer oder sperriger Reparaturvorrichtungen. Ferner ist dabei konstruktionsbedingt von Nachteil, daß sowohl die Form des Querschnittes der dabei entstehenden Durchströmöffnung auf die Kreisform festgelegt ist als auch die Größe des Durchström-Querschnittes zugunsten der Raumausnutzung in der Druckkammer deutlich begrenzt ist.

Aufgabe der vorliegenden Erfindung ist es, eine Vorrichtung zur Inspektion und Instandhaltung von Rohren wie beispielsweise Abwasserkanälen und Abwasserleitungen zur Verfügung zu stellen, mit deren Hilfe auch bei weiterem Abfluß von Abwässern durch das Rohr eine Inspektion und Instandhaltung bzw. Sanierung des gesamten Rohres möglich ist. Weiterhin ist es Aufgabe der vorliegenden Erfindung, eine Vorrichtung zur Verfügung zu stellen, die die im Stand der Technik genannten Nachteile vermeidet und eine einfache und sichere Inspektion und Instandhaltung von Abwasserrohren ermöglicht.

Diese Aufgabe wird durch die Vorrichtung nach dem Oberbegriff des Anspruchs 1 in Verbindung mit seinen kennzeichnenden Merkmalen gelöst. Vorteilhafte Weiterbildungen der erfindungsgemäßen Vorrichtung ergeben sich aus den Unteransprüchen.

Durch die bei der erfindungsgemäßen Vorrichtung gebildete Kammer steht innerhalb des Rohres ein fest umgrenzter Raum zur Verfügung, der abwasserfrei ist und innerhalb dessen eine Inspektion bzw. Bearbeitung der Rohrwandung möglich ist. Dadurch, daß sich die Kammer erfindungsgemäß nicht über den gesamten Querschnitt des Rohres erstreckt und folglich den Wasserabfluß innerhalb des Rohres nicht vollständig blokkiert, ist es möglich, an der Rohrwandung Arbeiten auszuführen, ohne den Betrieb des Abwasserrohres zu unterbrechen. Die Kammer kann beispielsweise mit Hilfe von Druckluft von Abwasser befreit werden und im Anschluß an die Durchführung der Arbeiten geflutet werden und an eine andere Stelle des Kanals transportiert bzw. entfernt werden. Dies kann durch eine herkömmliche Druckluftzufuhr über Druckluftleitungen und gesteuerte Ventile sowohl für die Luftzufuhr als auch für die Flutung mit Wasser erfolgen.

Dadurch, daß die Verspannelemente einen bestimmten Raum aufspannen, wird jede Beschädigungs- oder Verletzungsgefahr für Geräte oder Arbeiter in der Kammer ausgeschlossen. Wenn die Kammer als Druckkammer ausgebildet ist, können, um auch bei der Arbeit von Menschen in der Druckkammer jegliche Gefahr durch bei möglichen Störungen des Druckkammerbetriebes einbrechendes Abwasser auszuschließen, Arbeiter innerhalb der Druckkammer mit einer Taucherausrüstung ausgestattet werden.

Eine besonders stabile und sichere Abdichtung der Abdichtelemente gegen die Wandung des Rohres wird durch aufblasbare Verschlußelemente erreicht, beispielsweise durch elastische Druckschläuche wie Gummiwülste, Gummireifen und dergleichen. Sie dienen nicht nur der Abdichtung, sondern können gleichzeitig eine bessere Verspannung und Arretierung der Vorrichtung gegenüber dem abfließenden und je nach Abflußgeschehen möglicherweise auch aufgestauten Abwasser erzielen. Die Verschlußelemente können in umlaufenden Flanschen, die beispielsweise mit den Schottwänden verschweißt sind, gelagert sein und können mit Hilfe herkömmlicher Druckluft oder Druckflüssigkeitsleitungen mit Luft oder Flüssigkeit aufgeblasen bzw. ihr Druck kann durch geeignete, gesteuerte Ventile in herkömmlicher Weise entspannt werden.

Weiterhin kann die Druckkammer eine Entlastungsöffnung, beispielsweise ein Ventil, aufweisen für den Ausfluß von Abwasser bei der Druckluftbeaufschlagung der Druckkammer. Bei sehr großen Druckkammern kann für den Ein- und Auslaß von Arbeitern eine Personenschleuse an der Druckkammer angebracht werden. Bei kleineren Druckkammern bietet es sich an, mit Hilfe von Robotern oder Überwachungsvorrichtungen, wie beispielsweise ferngesteuerten Kameras, die innerhalb der Druckkammer und dort innerhalb des durch die Verspannelemente aufgespannten Raumes angeordnet sind, die nötigen Kontroll- und Instandsetzungsarbeiten durchzuführen.

Die Kammer kann mit Hilfe von Bewegungsvorrichtungen, wie beispielsweise Seilzügen oder Schreitvorrichtungen, in Längsrichtung des Rohres verschoben werden oder auch mit Hilfe von Drehvorrichtungen um die Achse des Rohres gedreht werden, so daß sukzessive sämtliche Bereiche der Rohrwandung innerhalb der Druckkammer zu liegen kommen und ohne Behinderung durch Abwasser untersucht bzw. instandgesetzt werden können. Hierbei ist lediglich darauf zu achten, daß bei der Verschiebung bzw. Drehung der Druckkammer die nacheinander in diese gelangenden Wandungsbereiche sich ausreichend überlappen, um die gesamte Wandung nahtlos bearbeiten zu können.

Die Kammer kann einen Kreis-, Ei- oder Maulquerschnitt oder beliebige daraus sowie aus weiteren Formen kombinierte Querschnittsformen aufweisen. So kann durch geeignete Wahl der Querschnittsform die Kammer so ausgeformt sein, daß bei Ablußquerschnitten mit Schmutzwassergerinne diese für den Trockenwetterabfluß offen bleibt.

Eine weitere vorteilhafte Ausführungsform weist Querschottwände auf, die ringförmig an den Verspannelementen befestigt sind und eine zentrale Öffnung aufweisen. Die Öffnungen der beiden Querschottwände sind durch eine rohrförmige Längsschottwand verbunden, so daß sich eine ringförmige Druckkammer bildet, deren zentrale Öffnung einen Durchlaß für die Abwässer bildet. Dieser Durchlaß steht als Abschlußquerschnitt zur Vorflutsicherung zur Verfügung, so daß das Rohr für den Zeitraum der Instandhaltungsarbeiten nicht vollständig außer Betrieb gesetzt werden muß. Zusätzlich kann selbstverständlich immer eine Abwasserpumpe eingesetzt werden, um den Abfluß zu erhöhen. Vorteilhafterweise können die Verspann- und/oder Abdichtelemente Öffnungen zur Durchführung von Steuerkabeln, Versorgungsleitungen oder dergleichen in die Druckkammer aufweisen.

Die Druckkammer kann auch zum Aufsuchen von Leckagen, zur Inspektion und auch zur Überprüfung durchgeführter Reparatur- und Sanierungsarbeiten zur Dichtigkeitsprüfung der Kanalwandung eingesetzt werden. Dazu wird die Druckkammer mit einem fluiden Druckmedium beaufschlagt und der durch Lecks etc. auftretende Druckverlust, Mediumsverlust oder die außen austretende Mediumsmenge beobachtet. Als Druckmedium eignen sich insbesondere Gase und Flüssigkeiten.

Der Kanal kann zur Anpassung an die jeweiligen Arbeitsbedingungen in der Querschnittsfläche der Kammer in seiner Lage veränderbar sein. Hierzu kann er vorteilhaft am vorderen und hinteren Ende der Kammer drehbar gelagert sein und innerhalb der Kammer exzentrisch zu der Achse zwischen seinen Drehpunkten verlaufen.

Weiterhin kann bei dieser Ausführungsform in den Abdichtelementen am in Fließrichtung des Mediums hinteren Ende der Kammer eine nach Bedarf zu öffnende oder zu schließende Klappe vorgesehen sein. Dadurch ist es beispielsweise möglich, in einem Notfall die Klappe zu öffnen, um einen höheren Abfluß des Abwassers zu erreichen. Hierbei muß die Kammer natürlich vom Personal oder etwaigen ferngesteuerten Robotern geräumt sein.

Im folgenden werden einige vorteilhafte Ausführungsbeispiele der erfindungsgemäßen Vorrichtung beschrieben. Es zeigen:
- Fig. 1a: eine erste Ausführungsform der erfindungsgemäßen Vorrichtung im Längsschnitt,
- Fig. 1b: die Vorrichtung nach Fig. 1a im Querschnitt,
- Fig. 1c: die Vorrichtung nach Fig. 1a in perspektivischer Darstellung,
- Fig. 2: eine zweite Ausführungsform der erfindungsgemäßen Vorrichtung im Längsschnitt,
- Fig. 3a: eine dritte Ausführungsform der erfindungsgemäßen Vorrichtung im Längsschnitt,
- Fig. 3b: die Vorrichtung nach Fig. 3a im Querschnitt,
- Fig. 3c: die Vorrichtung nach Fig. 3a in perspektivischer Darstellung,

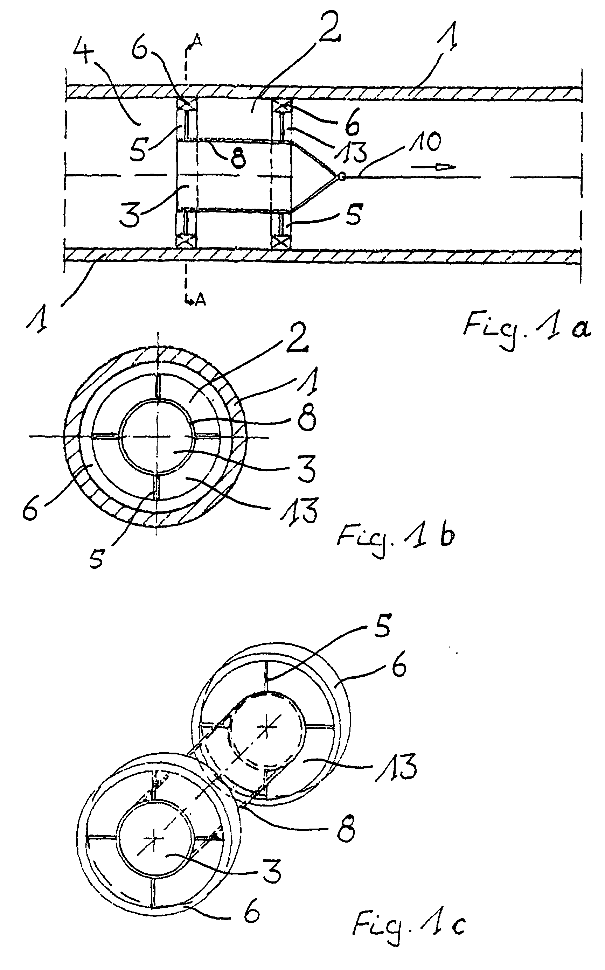

In Fig. 1 weist die in einem Abwasserrohr 4 mit einer Rohrwandung 1 angeordnete Vorrichtung Verspannelemente 5 und Abdichtelemente auf, die eine Kammer 2 aufspannen. Die Verspann- und Abdichtelemente sind so angeordnet, daß die Kammer 2 ringförmig sich entlang der Wandung 1 des Rohres 4 erstreckt. Die Verspannelemente 5 erstrecken sich ringförmig entlang der Rohrwand 1 sowie stegartig radial nach innen zur Aufnahme der Abdichtelemente. Die Abdichtelemente bestehen aus Seitenschottwänden 13 sowie einem Innenrohr (Längsschottwand) 8, die als Innenrohr ausgebildet ist. Die Seitenschottwände 13 sind über Verschlußelemente 6 abdichtend mit der Wandung 1 des Abwasserrohres 4 formschlüssig verbunden, so daß die Kammer 2 als Druckkammer ausgebildet ist. Die Verschlußelemente 6 bestehen aus ringförmig an der Wandung 1 anliegenden Gummiwülsten und sind in mit den Verspann- und Abdichtelementen verschweißten, entlang der Rohrwand 1 umlaufenden Flanschen gelagert. Zur Abdichtung können sie mit einem fluiden Medium, beispielsweise Wasser oder Luft aufgeblasen werden. Nicht dargestellt sind die für das Aufblasen mit Medium und für das Ablassen des Mediums nötigen Druckleitungen, Steuerungen und Ventile. Das Innenrohr 8 spannt einen Abflußquerschnitt 3 auf, durch den auch während des Betriebs der Druckkammer anfallende Abwässer zumindest teilweise abfließen können. Für eine beschleunigte Durchleitung des Abwassers durch den Abflußquerschnitt 3 kann am Eingang von diesem eine Pumpe vorgesehen sein, so daß die hindurchgeführte Abwassermenge erhöht werden kann. Die Pumpe kann gleichzeitig zur Erzeugung eines Wasserstrahls dienen, mit dem die Rohrwandung 1 sowie die Vorrichtung gereinigt werden können. An einem Ende der Vorrichtung ist ein Seilzug 10 angebracht, mit dem die Druckkammer in Längsrichtung des Rohres 4 verschoben werden kann.

Nach Positionierung der Druckkammer 2 im Abwasserrohr 4 werden die Verschlußelemente 6 mit einem Druckmedium, beispielsweise Wasser oder Luft, beaufschlagt und gegen die Innenwand 1 des Rohres 4 gepreßt. Anschließend wird die Druckkammer 2 so lange über hier ebenfalls nicht dargestellte herkömmliche Druckleitungen, Steuereinrichtungen und Ventile mit Druckluft beaufschlagt, bis das gesamte Abwasser aus der Druckkammer 2 entfernt ist. Als Entlastungsöffnung kann in einer der Schottwände ein steuerbares Ventil vorgesehen sein, das sich gegenüber dem Außenwasserdruck verschließt. Damit ist die Innenwand 1 des Abwasserrohres 4 im Bereich der Druckkammer 2 wasserfrei und für alle Instandhaltungsmaßnahmen, wie Reinigung, Inspektion und Schadensbehebung, zugänglich. In der Druckkammer 2 ist, hier nicht gezeigt, ein oder sind mehrere Roboter mit TV-Ausrüstung, welche alle diese Arbeitsgänge ausführen können, beweglich installiert, so daß sie alle freigelegten Bereiche des Abwasserkanals 4 erreichen können. Bei der dargestellten kreisringförmigen Druckkammer 2 können diese technischen Geräte am Innenrohr 8 längs- und/oder radialbeweglich geführt werden.

Nach Instandhaltung und Inspektion des jeweiligen Rohrabschnittes werden die Verschlußelemente 6 der Druckkammer 2 entlastet, so daß die Druckkammer 2 komplett mit dem Seilzug 10 in die durch einen Pfeil angedeutete Richtung zum nächsten Arbeitsbereich weitergezogen werden kann. Dabei soll die neue Position die alte etwas überlappen, um eine lückenlose Bearbeitung der Rohrwand 1 vornehmen zu können.

Fig. 1b zeigt einen Querschnitt durch die Vorrichtung nach Fig. 1a entlang der dort eingezeichneten Linie A-A.

In Fig. 1b ist deutlich das Innenrohr 8 zu erkennen, das mit Hilfe der Verspannelemente 5 eine Druckkammer 2 aufspannt. Die Druckkammer 2 ist ringförmig gegen die Rohrwandung 1 mit Hilfe von ringförmigen Verschlußelementen 6 abgedichtet.

Fig. 1c zeigt die in Fig. 1a dargestellte Vorrichtung in perspektivischer Ansicht, wobei hier deutlich der rohrförmige Abflußquerschnitt 3, der durch das Innenrohr 8 gebildet wird, zu erkennen ist.

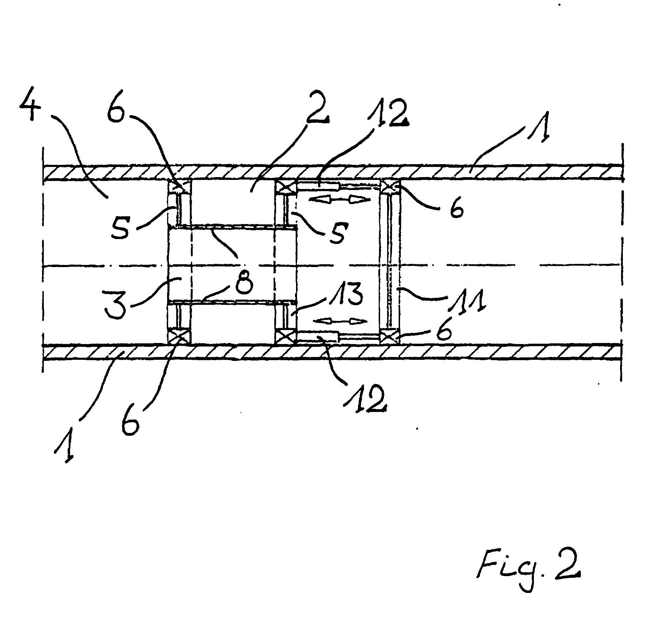

Fig. 2 zeigt eine Vorrichtung wie in Fig. 1a, wobei jedoch statt eines Seilzuges eine Schreitvorrichtung 11 zur Bewegung der Vorrichtung an dieser angeordnet ist. Auch die Schreitvorrichtung 11 weist Verschlußelemente 6 auf, mit denen die Schreitvorrichtung 11 an der Rohrwandung fixiert wird. Weiterhin ist die Schreitvorrichtung 11 über eine Teleskopeinrichtung 12, beispielsweise Hydraulikzylinder, mit der Vorrichtung verbunden. Bei dieser Anordnung werden nach Beendigung der Arbeitsgänge die Verschlußelemente 6 der Druckkammer 2 entlastet, so daß die Druckkammer 2 komplett durch Einziehen der Teleskopverbindungen 12 zum nächsten Arbeitsbereich weitergezogen wird. Anschließend werden die Verschlußelemente 6 der Druckkammer 2 wieder aufgeblasen und diese dadurch in der neuen Position verspannt. Zur Vorbereitung des nächsten Transportvorgangs werden nun die Verschlußelemente 6 der Schreitvorrichung 11 entspannt und die Schreitvorrichtung 11 über die Hydraulikzylinder 12 verschoben und anschließend durch Aufblasen der Verschlußelemente 6 der Schreitvorrichtung 11 diese in der neuen Position gesichert.

Fig. 3a zeigt eine Vorrichtung, die ebenfalls Verspann- und Abdichtelemente aufweist, die eine Druckkammer 2 innerhalb eines Abwasserkanals 4 aufspannen. In gleicher Weise wie bei der Vorrichtung nach Fig. 1a ist die Druckkammer 2 über Verschlußelemente 6 und 9 gegen die Rohrwandung 1 abgedichtet. Die Druckkammer 2 weist ein Drehgelenk 14 auf, das in der Mittelachse der Vorrichtung sowie des Abwasserrohrs 4 angeordnet ist. An diesem Drehgelenk 14 ist weiterhin eine Schreitvorrichtung 11 mit einem Teleskopzylinder 12 angeordnet, deren Funktion bereits bei Fig. 2 beschrieben wurde. Zusätzlich zur Fortbewegung der Druckkammer 2 in Längsrichtung des Abwasserrohres 4 ist jedoch auch eine Drehbewegung der Vorrichtung um die Mittelachse des Rohres 4 mit Hilfe des Drehgelenks 14 möglich.

Fig. 3b zeigt die Vorrichtung nach Fig. 3a in einem Querschnitt entlang der dort eingezeichneten Linie A-A. Wie aus Fig. 3b ersichtlich, wird die Druckkammer 2 durch die Wandung 1 des Rohres 4, durch zwei Seitenschottwände 13 sowie durch eine Längsschottwand 7, die an den Verspannelementen 5 verankert sind, aufgespannt. Diese Längsschottwand 7 erstreckt sich längs der Rohrrichtung und teilt dadurch das Rohr 4 in zwei Hälften. Die eine Hälfte bildet die abwasserfreie Druckkammer 2, während in der anderen Hälfte das Abwasser während des Betriebs der Druckkammer weiterhin abfließen kann. Die Längsschottwand 7 wird durch die Verschlußelemente 9 gegen die Wandung 1 des Rohres 4 abgedichtet. Weiterhin ist in Fig. 3b das Drehgelenk 14 zu erkennen, um dessen Achse die Vorrichtung gedreht werden kann. Dadurch ist es möglich, nacheinander sämtliche auf dem Innenumfang des Rohres 4 liegenden Bereiche mit der Druckkammer 2 zu bedekken, so daß durch entsprechende Drehung und Längsverschiebung der Vorrichtung die gesamte Rohrwandung 1 werden kann.

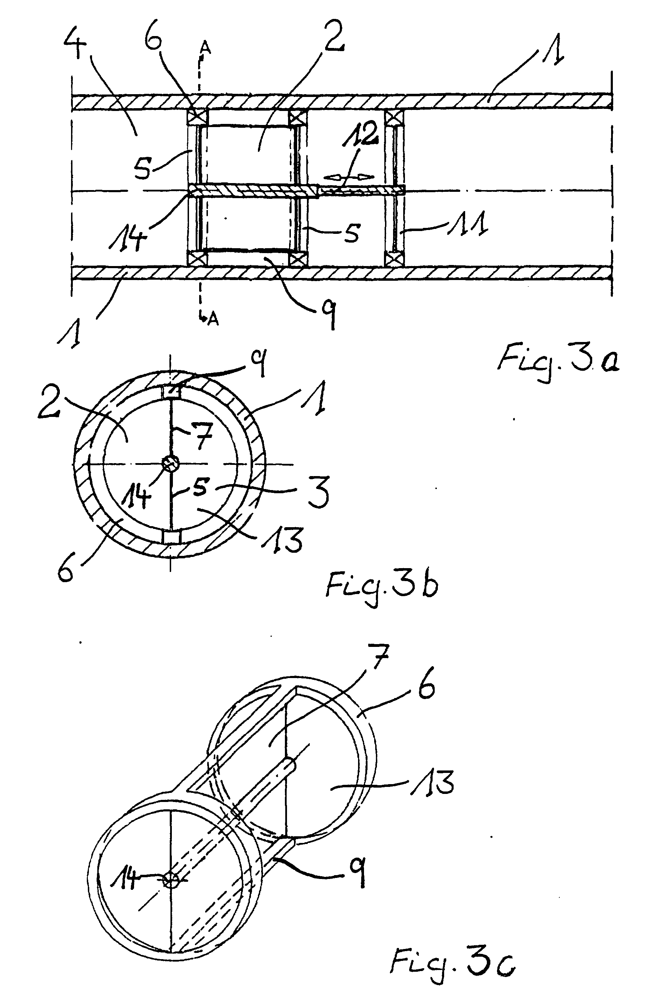

Fig. 3c zeigt eine perspektivische Ansicht der in Fig. 3a wiedergegebenen Vorrichtung. Deutlich zu erkennen ist, daß die Seitenschottwände 13 halbkreisförmig die Druckkammer 2 seitlich begrenzen und über die Längsschottwand 7 miteinander verbunden sind. Zur Positionierung und Stabilisierung der Längs- und Seitenschottwände 7, 13 dienen das Verschlußelement 6, das aus zwei sich ringförmig entlang der Innenwandung des Abwasserrohres 4 erstreckenden Ringelementen besteht sowie das mit diesen verbundene Verschlußelement 9 besteht. In der Mittelachse der Vorrichtung, die mit der Mittelachse des Abwasserrohres 4 zusammenfällt, befindet sich das Drehgelenk 14, mit dem die Vorrichtung um ihre Mittelachse gedreht werden kann.

## Patentansprüche

1. Vorrichtung zur Inspektion und Instandhaltung von fließfähige Medien leitenden Rohren (4) wie Abwasserkanälen und -leitungen, wobei
- mindestens zwei in Längsrichtung eines Rohres (4) hintereinanderliegende Verspannelemente (5) vorgesehen sind, die zwischen sich eine Kammer (2) innerhalb eines Rohres (4) aufspannen;
- die Kammer (2) sich nur über einen Teil des Querschnitts des Rohres (4) erstreckt;
- zumindest am in Fließrichtung des Mediums hinteren Ende der Kammer (2) an den Verspannelementen (5) Abdichtelemente (13), die seitlich dicht mit der Wand (1) des Rohres (4) abschließen, befestigt sind;
- sich ein Abdichtelement (8) zwischen den Verspannelementen (5) erstreckt, welches die Kammer (2) gegenüber dem Rohrinneren abdichtet,
- die Abdichtelemente (8, 13) an den Verspannelementen (5) befestigt sind zur Bildung einer Kammer,
**dadurch gekennzeichnet, dass**
als Abdichtelemente zwei Querschottwände (13) sich quer zur Rohrlängsrichtung die jeweils mindestens ein Verschlusselement (6) aufweisen, das sich ringförmig über den gesamten Innenumfang des Rohres (4) erstreckt über einen Teil des Rohrquerschnitts erstrecken und
eine Längsschottwand (8) sich zwischen den beiden Querschottwänden längs des Rohres erstreckt und den von den Querschottwänden (13) und der Rohrwand (1) umschlossenen Raum abdichtet.

2. Vorrichtung nach Anspruch 1, **dadurch gekennzeichnet, daß** die Kammer (2) an ihrem in Fließrichtung des Mediums vorderen Ende nur teilweise geschlossen ist.

3. Vorrichtung nach Anspruch 1 oder 2, **dadurch gekennzeichnet, dass** das Verschlusselement (6) aufblasbar ist.

4. Vorrichtung nach einem der Ansprüche 1 bis 3, **dadurch gekennzeichnet, daß** die Querschottwände (13) kreissegmentförmig und die Längsschottwand (7) planar oder entsprechend abgewinkelt ausgebildet sind.

5. Vorrichtung nach einem der Ansprüche 1 bis 3, **dadurch gekennzeichnet, daß** die Querschottwände (13) ringförmig mit einer zentralen Öffnung und die Längsschottwand (8) rohrförmig ausgebildet ist, wobei die Längsschottwand (8) die zentralen Öffnungen der Querschottwände (13) einen Durchlaß durch die Druckkammer (2) bildend verbindet.

6. Vorrichtung nach mindestens einem der Ansprüche 1 oder 3 bis 5, **dadurch gekennzeichnet, daß** die Druckkammer (2) eine Entlastungsöffnung, beispielsweise ein Ventil, aufweist.

7. Vorrichtung nach mindestens einem der Ansprüche 1 oder 3 bis 6, **dadurch gekennzeichnet, daß** die Druckkammer (2) eine Personenschleuse aufweist.

8. Vorrichtung nach Anspruch 2, **dadurch gekennzeichnet, daß** in Längsrichtung des Rohres (4) durch die Kammer (2) ein gegenüber dieser abgedichteter, mit dem Rohrinnern vor und hinter der Kammer (2) verbundener Kanal (18) geführt ist.

9. Vorrichtung nach Anspruch 8, **dadurch gekennzeichnet, daß** der Kanal (18) in der Querschnittsfläche der Kammer (2) in seiner Lage veränderbar ist.

10. Vorrichtung nach Anspruch 9, **dadurch gekennzeichnet, daß** der Kanal (18) am vorderen und hinteren Ende der Kammer (2) drehbar gelagert und innerhalb der Kammer (2) exzentrisch zu der Achse zwischen seinen Drehpunkten verläuft.

11. Vorrichtung nach einem der Ansprüche 8 bis 10, **dadurch gekennzeichnet, daß** in den Abdichtelementen (13) am in Fließrichtung des Mediums hinteren Ende der Kammer (2) eine nach Bedarf zu öffnende oder zu schließende Klappe (15) vorgesehen ist.

12. Vorrichtung nach mindestens einem der vorhergehenden Ansprüche, **dadurch gekennzeichnet, daß** an einem Ende der Kammer (2) eine Seilzugvorrichtung (10) und/oder eine Schreitvorrichtung (11) zur Bewegung der Kammer (2) in Längsrichtung des Rohres (4) angreift.

13. Vorrichtung nach mindestens einem der vorhergehenden Ansprüche, **dadurch gekennzeichnet, daß** eine Vorrichtung (14) zum Drehen der Kammer (2) um die Rohrachse vorgesehen ist.

14. Vorrichtung nach mindestens einem der vorhergehenden Ansprüche, **dadurch gekennzeichnet, daß** die Verspann-(5) und/oder Abdichtelemente (8,13) Öffnungen zur Durchführung von Steuerkabeln oder Versorgungsleitungen in die Kammer (2) aufweisen.

15. Vorrichtung nach mindestens einem der vorhergehenden Ansprüche, **dadurch gekennzeichnet, daß** in der Kammer (2) fernsteuerbare Werkzeuge oder Überwachungsvorrichtungen zur Instandhaltung, Reinigung, Inspektion oder Sanierung des Rohres angeordnet sind.

16. Vorrichtung nach mindestens einem der vorhergehenden Ansprüche, **dadurch gekennzeichnet, daß** am in Fließrichtung des Mediums hinteren Ende der Kammer (2) außerhalb von dieser eine Pumpe angeordnet ist für den beschleunigten Durchgang des Mediums durch den nicht von der Kammer (2) überspannten Querschnitt des Rohres (4).

## Claims

1. An apparatus for the inspection and servicing of pipes (4) that transport flowable mediums such as wastewater canals and pipelines, whereby
- at least two tensioning elements (5) are arranged longitudinally along a pipe (4) one after the other, and whereby these incorporate a chamber (2) within a pipe (4) held with the aid of tension between the same;
- the chamber (2) extends only partially across the cross-section of the pipe (4);
- the tensioning elements (5) are equipped with sealing elements (13) that sealingly engage the wall (1) of the pipe (4) at least at that end of the chamber (2) that represents the rear end in the direction of the flow of the medium;
- a sealing element (8) extends between the tensioning elements (5) which sealingly engages the chamber (2) with the interior of the pipe;
- the sealing elements (8, 13) are fixedly connected to the tensioning elements (5) in order to form a chamber;
**characterised in that** two crossing bulkheads (13) extend across the longitudinal direction of the pipe and across a part of the pipe cross-section as sealing elements, whereby the same incorporate at least one locking element (6) which extends in an annular fashion across the entire internal diameter of the pipe (4), and a longitudinal bulkhead (8), which extends between the two crossing bulkheads and along the pipe, and which sealingly engages the crossing bulkheads (13) with the pipe wall (1) to create an enclosed space.

2. An apparatus according to Claim 1, **characterised in that** the chamber (2) is only partially closed at that end of the same that represents the front end in the direction of the flow of the medium.

3. An apparatus according to Claim 1 or 2, **characterised in that** the locking element (6) is inflatable.

4. An apparatus according to one of the preceding Claims 1 to 3, **characterised in that** the crossing bulkheads (13) incorporate an annular segmented form and **in that** the longitudinal bulkhead (7) ist planar or correspondingly angled.

5. An apparatus according to one of the preceding Claims 1 to 3, **characterised in that** the crossing bulkheads (13) incorporate an annular form with a central opening and **in that** the longitudinal bulkhead (8) incorporates a pipe-like form, whereby the opening of the longitudinal bulkhead (8) connectively engages with the central openings of the crossing bulkheads (13) and therefore forms a path through the pressure chamber (2).

6. An apparatus according to at least one of the preceding Claims 1 or 3 to 5, **characterised in that** the pressure chamber (2) incorporates a relief outlet, for example in the form of a valve.

7. An apparatus according to at least one of the preceding Claims 1 or 3 to 6, **characterised in that** the pressure chamber (2) incorporates a personnel lock.

8. An apparatus according to Claim 2, **characterised in that** a channel (18) that is connected with the interior of the pipe prior to and after the chamber (2) extends through the same chamber (2) in the longitudinal direction of the pipe (4) and sealingly engages the same.

9. An apparatus according to Claim 8, **characterised in that** the position of the channel (18) within the cross-sectional surface of the chamber (2) is changeable.

10. An apparatus according to Claim 9, **characterised in that** the channel (18) is fixedly connected to the front and the rear ends of the chamber (2) via a rotational bearing, and **in that** it extends eccentrically within the same chamber (2) in relation to the axis between the rotation points.

11. An apparatus according to one of the preceding Claims 8 to 10, **characterised in that** a shutter (15) that can be opened or closed as desired is incorporated into the sealing elements (13) at that end of the chamber (2) that represents the rear end in the direction of the flow of the medium.

12. An apparatus according to at least one of the preceding Claims, **characterised in that** a pulley mechanism (10) and/or an advancing mechanism (11) for the movement of the chamber (2) is incorporated at one end of the same chamber (2) and is fixedly connected in the longitudinal direction of the pipe (4).

13. An apparatus according to at least one of the preceding Claims, **characterised in that** it incorporates an apparatus (14) for the rotating of the chamber (2) around the axis of the pipe.

14. An apparatus according to at least one of the preceding Claims, **characterised in that** the tensioning (5) and/or sealing elements (8,13) incorporate openings for the routing of control cables or supply lines into the chamber (2).

15. An apparatus according to at least one of the preceding Claims, **characterised in that** the chamber (2) incorporates remote controlled tools or monitoring means for the servicing, cleaning, inspection or repair of the pipe.

16. An apparatus according to at least one of the preceding Claims, **characterised in that** a pump for the accelerated transport of the medium through the cross-section of the pipe (4) that is not intersected by the chamber (2) is fixedly connected to the outside of that end of the chamber (2) that represents the rear end in the direction of the flow of the medium.

## Revendications

1. Dispositif pour l'inspection et la maintenance de tubes (4) qui véhiculent des milieux aptes à s'écouler, comme des canaux et conduites d'eaux usées, dans lequel
- il est prévu au moins deux éléments de serrage (5) qui sont situés l'un derrière l'autre dans la direction longitudinale d'un tube (4) et qui serrent entre eux une chambre (2) à l'intérieur d'un tube (4);
- la chambre (2) s'étend seulement sur une partie de la section transversale du tube (4) ;
- au moins sur l'extrémité de la chambre (2), qui est située en aval dans la direction d'écoulement du milieu, sur les éléments de serrage (5) sont fixés des éléments d'étanchéité (13), qui s'appliquent latéralement d'une manière étanche contre la paroi (1) du tube (4);
- un élément d'étanchéité (8), qui ferme d'une manière étanche la chambre (2) par rapport à l'intérieur du tube, s'étend entre les éléments de serrage (5),
- les éléments d'étanchéité (8, 13) sont fixés sur les éléments de serrage (5) pour former une chambre,
**caractérisé en ce que**
en tant qu'éléments d'étanchéité, deux parois transversales de séparation (13), qui possèdent chacune au moins un élément de fermeture (6) qui s'étend selon une forme annulaire sur l'ensemble de la périphérie intérieure du tube (4), s'étendent transversalement par rapport à la direction longitudinale du tube sur une partie de la section transversale de ce dernier, et
une paroi longitudinale de séparation (8) s'étend entre les deux parois transversales de séparation le long du tube et ferme de façon étanche l'espace enserré par les parois transversales de séparation (13) et la paroi (1) du tube.

2. Dispositif selon la revendication 1, **caractérisé en ce que** la chambre (2) est fermée seulement partiellement au niveau de son extrémité avant selon la direction d'écoulement du milieu.

3. Dispositif selon la revendication 1 ou 2, **caractérisé en ce que** l'élément de fermeture (6) est gonflable.

4. Dispositif selon l'une des revendications 1 à 3, **caractérisé en ce que** les parois transversales de séparation (13) sont agencées sous la forme de segments de cercle et la paroi longitudinale de séparation (7) est agencée de manière à être plane ou coudée de façon correspondante.

5. Dispositif selon l'une des revendications 1 à 3, **caractérisé en ce que** les parois transversales de séparation (13) sont agencées avec une forme annulaire comportant une ouverture centrale et la paroi longitudinale de séparation (8) est agencée avec une forme annulaire, la paroi longitudinale de séparation (8) reliant les ouvertures centrales des parois transversales de séparation (13) en définissant un passage traversant la chambre de pression (2).

6. Dispositif selon au moins l'une des revendications 1 ou 3 à 5, **caractérisé en ce que** la chambre de pression (2) comprend une ouverture de détente, par exemple une soupape.

7. Dispositif selon au moins l'une des revendications 1 ou 3 à 6, **caractérisé en ce que** la chambre de pression (2) comprend un sas de passage pour une personne.

8. Dispositif selon la revendication 2, **caractérisé en ce qu'**un canal (18), qui est fermé de façon étanche vis-à-vis de la chambre (2) et est relié à l'intérieur du tube en amont et en aval de la chambre (2), est guidé dans la direction longitudinale du tube (15) à travers la chambre.

9. Dispositif selon la revendication 8, **caractérisé en ce que** la position du canal (18) dans la surface en coupe transversale de la chambre (2) peut être modifiée.

10. Dispositif selon la revendication 9, **caractérisé en ce que** le canal (18) est monté de manière à pouvoir tourner sur les extrémités avant et arrière de la chambre (2) et s'étend à l'intérieur de la chambre (2) en étant excentré par rapport à l'axe entre ses centres de rotation.

11. Dispositif selon l'une des revendications 8 à 10, **caractérisé en ce qu'**un clapet (15), qui peut être ouvert ou fermé en fonction des besoins, est prévu dans les éléments d'étanchéité (13) sur l'extrémité de la chambre (2) qui se situe en aval dans la direction de circulation du milieu.

12. Dispositif selon au moins l'une des revendications précédentes, **caractérisé en ce qu'**un dispositif à câble de traction (10) et/ou un dispositif marchand (11) est raccordé à une extrémité de la chambre (2) pour déplacer la chambre (2) dans la direction longitudinale du tube (4).

13. Dispositif selon au moins l'une des revendications précédentes, **caractérisé en ce qu'**il est prévu un dispositif (14) pour faire tourner la chambre (2) autour de l'axe du tube.

14. Dispositif selon au moins l'une des revendications précédentes, **caractérisé en ce que** les éléments de serrage (5) et/ou les éléments d'étanchéité (8, 13) comportent des ouvertures pour le passage de câble de commande ou de lignes d'alimentation dans la chambre (2).

15. Dispositif selon au moins l'une des revendications précédentes, **caractérisé en ce que** des outils ou des dispositifs de contrôle télécommandables pour la maintenance, le nettoyage, l'inspection ou l'assainissement du tube sont disposés dans la chambre (2).

16. Dispositif selon au moins l'une des revendications précédentes, **caractérisé en ce que** sur l'extrémité aval, selon la direction d'écoulement du fluide, de la chambre (2) et à l'extérieur de cette dernière est disposée une pompe servant à faire passer d'une manière accélérée le milieu à travers la section transversale du tube (4), qui n'est pas occupée par la chambre (2).
